**Europäisches Patentamt**

**European Patent Office**

**Office européen des brevets**

(19)

(11) Veröffentlichungsnummer : **0 092 686 B2**

(12) # NEUE EUROPÄISCHE PATENTSCHRIFT

(45) Veröffentlichungstag der neuen Patentschrift :
**11.03.92 Patentblatt 92/11**

(51) Int. Cl.⁵ : **B29C 33/30**

(21) Anmeldenummer : **83103098.6**

(22) Anmeldetag : **29.03.83**

(54) **Schnellwechsel- und/oder Spannvorrichtung für die Formwerkzeuge von Spritzgiessmaschinen.**

(30) Priorität : **26.04.82 DE 3215567**

(43) Veröffentlichungstag der Anmeldung :
**02.11.83 Patentblatt 83/44**

(45) Bekanntmachung des Hinweises auf die
Patenterteilung :
**13.07.88 Patentblatt 88/28**

(45) Bekanntmachung des Hinweises auf die
Entscheidung über den Einspruch :
**11.03.92 Patentblatt 92/11**

(84) Benannte Vertragsstaaten :
**AT CH DE FR GB IT LI NL**

(56) Entgegenhaltungen :
**EP-A- 0 025 995**
**DE-A- 1 529 867**
**DE-A- 2 332 205**
**DE-A- 2 457 288**
**DE-A- 2 718 126**
**DE-A- 2 724 020**
**DE-A- 2 938 665**
**DE-A- 2 947 938**
**DE-B- 2 617 255**
**DE-C- 1 113 805**
**DE-C- 2 421 811**
**DE-U- 1 821 023**

(56) Entgegenhaltungen :
**JP-A- 5 567 428**
**JP-U- 5 694 313**
**US-A- 4 202 522**
**KUNSTSTOFFE, Band 70, No. 3, 3.1980, H.**
**DIEBEL, Produktionssteigerung beim Spritz-**
**gieBen durch Veringern der Maschinen-Still-**
**stands-Zeiten**
**Patent Abstracts of Japan, Band 4, No. 76,**
**3.6.1980, Seite 138M14**
**"EOC Normalien" der E.O. Cummenerl K:G: -**
**aus Katalog 1960**

(73) Patentinhaber : **Battenfeld GmbH**
**Scherl 10**
**W-5882 Meinerzhagen (DE)**

(72) Erfinder : **Cyriax, Wilhelm**
**Ahornstrasse 21**
**W-5882 Meinerzhagen 1 (DE)**
Erfinder : **Holzschuh, Johann**
**Haydnstrasse 4**
**W-5882 Meinerzhagen 1 (DE)**
Erfinder : **Tamboers, Gerhard**
**Affelner Strasse 43**
**W-5970 Plettenberg (DE)**

(74) Vertreter : **Müller, Gerd et al**
**Patentanwälte**
**HEMMERICH-MÜLLER-GROSSE-POLLMEIER-MEY**
**Hammerstrasse 2**
**W-5900 Siegen 1 (DE)**

EP 0 092 686 B2

## Beschreibung

Durch die JP-U-56-94313 ist eine Schnellwechsel- und/oder Schnellspannvorrichtung für die Formwerkzeuge von Spritzgießmaschinen mit einer ortsfesten Formaufspannplatte und mit einer wahlweise zum Schließen des Formwerkzeuges auf diese zu und zum Öffnen desselben von dieser weg bewegbaren Formaufspannplatte bekannt. Jede Formhälfte des Fromwerkzeuges ist auf einer rückseitig ebenen Adapterplatte vormontiert. Die Formhälften sind zwischen die geöffneten Formaufspannplatten einschiebbar und über Klemmorgane gegen diese festlegbar. Beide Formaufspannplatten weisen parallel zur Einschubrichtung des Formwerkzeuges verlaufende ortsfeste Einschubführungen für die zugehörigen Formhälften auf.

Außerdem sind beide Formaufspannplatten je mit einem Kupplungsstücke aufweisenden Anschlußträger und beide Formhälften mit einem dazu passenden, Gegenkupplungsstücke enthaltenden Armaturenträger von Energie- bzw. Medienzuführungssystemen versehen. Die Kupplungsstücke des Anschlußträgers der Formaufspannplatten und die Gegenkupplungsstücke des Armaturenträgers der zugeordneten Formhälften sind parallel zu den Einschubführungen gerichtet. Die Adapterplatten der Formhälften sind parallel zu ihrer Ebene in die Einschubführungen der Formaufspannplatten einrückbar. Die Kupplungsstücke der Anschlußträger an den Formaufspannplatten sind zu den Gegenkupplungsstücken der Armaturenträger an den zugehörigen Formhälften über die Einschubführungen gegeneinander ausrichtbar und selbsttätig miteinander in Wirkverbindung bringbar.

Der Erfindung liegt die Aufgabe zugrunde, die bekannte Wechselund/oder Schnellspannvorrichtung für die Formwerkzeuge von Spritzgießmaschinen zu verbessern, so daß neben einer unmittelbar exakten Ausrichtung des Formwerkzeuges in der Schließeinheit der Spritzgießmaschine zugleich auch sichergestellt ist, daß die mit dem jeweiligen Formwerkzeug zusammenarbeitenden Energie- bzw. Medienzuführungssysteme beim Wechselvorgang unmittelbar, exakt und funktionssicher mit diesem in und außer Anschlußverbindung gelangen können.

Gelöst wird diese Aufgabe erfindungsgemäß durch die Merkmale des Anspruchs 1.

Aufgrund dieser Ausgestaltung wird eine kompakt gebaute und eine beim Werkzeugwechsel leicht zu handhabende Schnellwechsel- und/oder Schnellspannvorrichtung für Formwerkzeuge geschaffen, die beim Werkzeugwechsel automatisch die Verbindungen zwischen den werkzeugseitigen Kupplungsstücken und den maschinenseitigen Gegenkupplungsstücken von Energie- bzw. Medienzuführungssystemen wirksam und unwirksam macht.

Die Montage der auf die Adapterplatte vormontierten Formwerkzeuge kann nun in der Weise erfolgen, daß diese zunächst nur mit der ortsfesten Formaufspannplatte in ordnungsgemäße Verbindung gebracht und dann anschließend durch Heranfahren der beweglichen Formaufspannplatte mit dieser gekuppelt werden. Nach dem anschließenden Lösen der Verriegelung bzw. Kupplung sind dann auf einfachste Art und Weise die beiden Formhälften des Formwerkzeuges zentriert und aufeinander ausgerichtet.

Nach Anspruch 2 wird ein Weiterbildungsmerkmal darin gesehen, daß einerseits die Kupplungsstücke an jeder Formaufspannplatte und andererseits die Gegenkupplungsstücke an jeder Adapterplatte mit bestimmtem Rastermaß zueinander angeordnet sind.

Eine optimale Zusammenarbeit einerseits der Anschlußträger an den Formaufspannplatten und andererseits der Armaturenträger an den Adapterplatten ist damit gewährleistet.

Ein wesentlicher Vorteil bei der erfindungsgemäßen Schnellwechselund/oder Schnellspannvorrichtung liegt darin, daß die Energie- bzw. Medienzuführungssysteme für die eine Formhälfte selbsttätig wirksam oder unwirksam werden, wenn das Formwerkzeug relativ zu den Einschubführungen und Stützorganen der einen Formaufspannplatte verlagert wird, während sich die Wirksamkeit oder Unwirksamkeit der Energie- bzw. Medienzuführungssysteme für die andere Formhälfte bei Bewegung der zweiten Formaufspannplatte in ihrer üblichen Verstellrichtung ergibt.

Gemäss Anspruch 4 ist nach der Erfindung ferner vorgesehen, dass am Armaturenträger Ventile oder ähnliche Regel- und/oder Stellorgane des Energie- bzw. Medienzuführsystems angeordnet sind, so dass eine Voreinstellung der Durchströmquerschnitte bereits bei de Montage der Werkzeughälften auf die Adapterplatten möglich ist und diese Einstellung nicht erst beim Werkzeugwechsel an der Spritzgiessmaschine vorgenommen werden muss.

Ein bauliches Ausgestaltungsmerkmal der Erfindung wird nach Anspruch 5 ferner darin gesehen, dass an dem mit den Stützorganen zusammenwirkenden Ende der Adapterplatten Ausschnitte vorgesehen sind, in deren Bereich die Armaturenträger und Anschlussträger sitzen, während sich seitlich davon und unterhalb derselben die Stützorgane befinden.

Abgesehen davon, dass diese Massnahme dazu beiträgt, die Rüstzeiten beim Werkzeugwechsel zu verringern, werden besonders die Armaturen, wie Regel- und/oder Stellorgane des Energie- bzw. Medienzuführsystems gegen Beschädigungen sowohl innerhalb als auch ausserhalb der Spritzgiessmaschine geschützt.

Nach Anspruch 6 sieht die Erfindung vor, dass die Klemmorgane der Schnellspannvorrichtung aus Druckdaumen bestehen, die durch ein über einen Druckmittelzylinder bewegbares doppeltes Kniehebelsystem betätigbar sind, wobei das doppelte Kniehebelsystem nach Art eines Gelenkvierecks ausgelegt ist.

Als vorteilhaft kann es sich nach der Erfindung ferner erweisen, wenn gemäss Anspruch 7 der Druckdaumen von einem Arm eines zweiarmigen Hebels gebildet ist und der zweite Arm desselben in der Wirkstellung des Druckdaumens durch einen Anschlag an dem vom Druckmittelzylinder bewegten Lenker des zweiten Kniehebels bei Strecklage des zweiten Kniehebels zusätzlich abstützbar ist.

Nach Anspruch 8 reicht es erfindungsgemäss aus, wenn der Druckdaumen um 90° verschwenkbar gelagert ist und in seiner unwirksamen Stellung der erste Kniehebel wenigstens annähernd eine Strecklage einnimmt.

Das doppelte Kniehebelsystem zur Betätigung des Druckdaumens stellt einerseits sicher, dass der letzte problemlos in seiner Freigabestellung verbleibt, andererseits aber selbst dann in seiner Spannstellung gesichert wird, wenn im Druckmittelzylinder ein Druckabfall auftritt oder aber dieser vom Arbeitsdruck entlastet wird.

Für einen schnellen und zügigen Wechsel des Formwerkzeuges erweist es sich aber auch noch als wichtig, wenn nach Anspruch 9 das Einlaufende der Einschubführungen mit schrägen Leitflächen versehen wird und gegebenenfalls auch am vorlaufenden Ende der Adapterplatten entsprechend angeschrägte Leitflächen vorhanden sind.

Bei einer in besonders zweckmässiger Weise ausgestalteten Schnellwechsel- und/oder Schnellspannvorrichtung sind nach Anspruch 10 die Einschubführung von an der Stirnfläche der Formaufspannplatte sitzenden Leisten gebidet, die einerseits parallel zur jeweiligen Einschubrichtung der Adapterplatten gerichtete Führungsflächen haben und andererseits mit vor die Stirnflächen der Adapterplatten greifenden Stützflächen versehen sind.

Bei dieser Ausführungsform hat es sich nach Anspruch 11 bestens bewährt, wenn die Stützflächen für die parallel zu ihrer Ebene in die Einschubführungen der zugehörigen Formaufspannplatte einrückbare Adapterplatte durch einstückig an die Leisten angeformte Nasen gebildet sind, während die Stützflächen für die quer zu ihrer Ebene in die Einschubführungen der anderen Formaufspannplatte einrückbare Adapterplatte aus quer verschiebbaren Nocken besteht.

Eine weitere Ausgestaltungsmöglichkeit dieser Schnellwechsel- und/oder Schnellspannvorrichtung besteht nach Anspruch 12 aber auch noch darin, dass sämtlichen Einschubführungen querverschiebbare Nocken zugeordnet sind, die aus Keilen bestehen, und, vorzugsweise einzeln, über Druckmittelzylinder als Klemmorgane gegen die Adapterplatten verspannbar sind.

Schliesslich hat es sich nach Anspruch 13 aber auch bewährt, dass die Druckmittelzylinder an der Aussenseite der Leisten sitzen.

Weitere Merkmale und Vorteile des Gegenstandes der Erfindung werden nachfolgend anhand einer Zeichnung ausführlich erläutert.

Hierbei zeigt

Fig. 1 in der Seitenansicht die Formaufspannplatten einer Spritzgiessmaschine mit zwischen diesen über eine Schnellwechsel- und/oder Schnellspannvorrichtung eingebautem Formwerkzeug,

Fig. 2 einen Schnitt entlang der Linie II-II in Fig. 1,

Fig. 3 einen Schnitt entlang der Linie III-III in Fig. 1,

Fig. 4 eine Teildraufsicht in Pfeilrichtung IV auf die Anordnung nach Fig. 1,

Fig. 5 einen Schnitt entlang der Linie V-V in den Fig. 2 und 3,

Fig. 6 einen Schnitt entlang der Linie VI-VI in Fig. 2,

Fig. 7 in grösserem Massstab eine Ansicht in Pfeilrichtung VII in den Fig. 2 und 3,

Fig. 8 eine der Fig. 7 entsprechende Darstellung, jedoch in einer anderen Betriebslage,

Fig. 9 eine der Fig. 1 entsprechende Darstellung der Formaufspannplatten einer Spritzgiessmaschine teilweise im Schnitt bei abgewandelter Bauart der Schnellwechsel- und/oder Schnellspannvorrichtung für das Formwerkzeug,

Fig. 10 in räumlicher Ansichtsdarstellung jeweils die beiden Formaufspannpjatten nach Fig. 9 mit den Schnellwechsel- und/oder Schnellspannvorrichtungen und den beiden Hälften des Formwerkzeuges und

Fig. 11 in schematisch vereinfachter Darstellung einen Vertikalschnitt durch eine Spritzgiessmaschine mit zugeordneter Wechselvorrichtung für das Formwerkzeug.

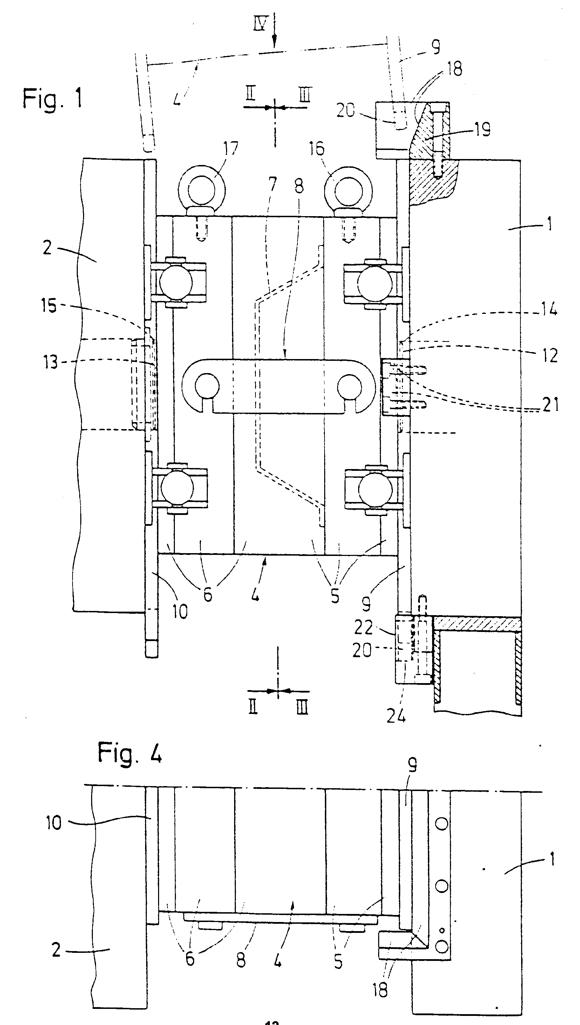

In Fig. 1 der Zeichnung ist von einer Spritzgiessmaschine üblicher Bauart einerseits nur die ortsfeste Formaufspannplatte 1 und andererseits nur die relativ dazu horizontal verschiebbare Formaufspannplatte 2 gezeigt.

Die Ausrichtung und relativ verschiebbare Führung der Formaufspannplatte 2 gegenüber der Formaufspannplatte 1 wird durch mehrere, beispielsweise vier, im Querschnitt runde Stangen 3 erreicht, wie sie in den Fig. 2 und 3 ersichtlich sind.

Zwischen die beiden Formaufspannplatten 1 und 2 der Spritzgiessmaschine wird das eigentliche Formwerkzeug 4 eingesetzt, welches im wesentlichen aus den beiden Formhälften 5 und 6 besteht, zwischen denen die Formkammer 7 ausgebildet ist.

Die beiden Formhälften 5 und 6 des Formwerkzeuges 4 sind für den Werkzeugwechsel, wie er in Fig. 1 durch strichpunktierte Linien angedeutet ist, aus Sicherheitsgründen in der Schliesslage des Formwerkzeuges 4 durch besondere Kupplungselemente 8 gegeneinander verriegelt. Nach dem Einbau des Formwerkzeugs 4 zwischen den beiden Formaufspannplatten 1 und 2 der Spritzgiessmaschine sind dann die Kupplungselemente 8 lösbar, so dass die beiden Formhälften 5 und 6 wahlweise zum Öffnen des Formwerkzeuges 4 auseinandergefahren oder zum Schliessen desselben zusammengefahren werden können.

Die Formhälfte 5 des Formwerkzeuges 4 ist auf einer flachen Adapterplatte 9 vormontiert, während die Formhälfte 6 auf einer ähnlichen, flachen Adapterplatte 10 befestigt ist.

Sämtliche Adapterplatten 9 und 10 der in die Spritzgiessmaschine bzw. zwischen deren Formaufspannplatten 1 und 2 einsetzbaren Formwerkzeuge 4 haben übereinstimmende Abmessungen, auch wenn die verschiedenen Formwerkzeuge 4 selbst unterschiedlich bemessen sind. Damit jedoch eine Verbindung der Adapterplatten 9 und 10 mit jedem beliebigen Formwerkzeug 4 möglich ist. sind die Adapterplatten 9 und 10 mit einer Vielzahl von Befestigungseingrirfen 11, beispielsweise in Form von Gewindebohrungen, versehen, die eine vorbestimmte Raster-Anordnung aufweisen und bedarfsweise mit Befestigungsschrauben des Formwerkzeugs 4 bzw. der Formhälften 5 und 6 zusammenwirken können.

Die exakte Ausrichtung des Formwerkzeugs 4 bzw. der Formhälften 5 und 6 relativ zu den zugehörigen Adapterplatten 9 und 10 erfolgt über rückseitige Zentrieransätze 12 und 13, welche jeweils mit Passsitz in zugehörige Zentrierausnehmungen 14 und 15 der Adapterplatten 9 und 10 eingreifen.

Der Werkzeugwechsel, d.h. der Aus- und Einbau der Formwerkzeuge 4 zwischen den Formaufspannplatten 1 und 2 erfolgt, wie in Fig. 1 angedeutet, von oben her, also in einer quer zur Öffnungs- und Schliessbewegung des Formwerkzeuges 4 verlaufenden Richtung. Er kann unter Zuhilfenahme eines Hebezeuges bewirkt werden, welches an den Hängeösen 16 und 17 des Formwerkzeuges 4 angreift.

Damit beim Absenken des Formwerkzeuges 4 zwischen die beiden Formaufspannplatten 1 und 2 ohne weiteres eine exakte Ausrichtung des Formwerkzeuges 4 erreicht wird. sind am Einlaufende der ortsfesten Formaufspannolatte Leiftlächen 18 in einer auf dem Kopfende der Formaufspannplatte 1 befestigten Leiste 19 vorgesehen. die eine trichterartige Neigungslage haben, wie das aus den Fig. 1, 2 und 4 deutlich wird. Über diese Leitflächen 18 und gegebenenfalls zugehörige Gegen-Leitflächen 20 am unteren Ende der Adapterplatte 9 wird letztere mit ihr auch das gesamte Formwerkzeug 4 eine exakte Absenkposition relativ zu den Formaufspannplatten 1 und 2 gebracht. Beim weiteren Absenken des Formwerkzeuges 4 gelangt dann dessen Adapterplatte 9 zwischen besondere Einschubführungen 21 und 22, die an der stationären Formaufspannplatte 1 ortsfest sitzen bzw. ausgebildet sind. Diese Einschubführungen 21 und 22 erstrecken sich in Vertikalrichtung, also normal zur Verstellrichtung der beweglichen Formaufspannplatte 2 und sind so ausgebildet. dass sie die Adapterplatte 9 sowohl parallel als auch quer zu ihrer Einschubrichtung exakt gegen die stationäre Formaufspannplatte 1 zentrieren und ausrichten.

Das Einlaufen der Adapterplatte 9 in die unteren Einschubführungen 22 der stationären Formaufspannplatte 1 wird dabei durch das Zusammenwirken ihrer Einlaufschrägen 20 mit angepassten Einlaufschrägen 23 an den Einschubführungen 22 begünstigt.

Die exakte Höhenlage der Adapterplatte 9 und damit des gesamten Formwerkzeuges 4 zwischen den Formaufspannplatten 1 und 2 wird durch Stützorgane 24 bestimmt, die an der stationären Formaufspannplatte 1 befestigt oder ausgebildet so sind, wie das deutlich aus den Fig. 1 und 2 hervorgeht.

Nach dem Aufsetzen der Adapterplatte 9 auf die Stützorgane 24 der stationären Formaufspannplatte 1 werden mehrere, beispielsweise vier, an der Formaufspannplatte 1 schwenkbar gelagerte Druckdaumen 25 durch Beaufschlagung je eines Druckmittelzylinders 26 betätigt und damit gegen die Formaufspannplatte 1 festgelegt. Sodann wird die bewegliche Formaufspannplatte 2 in ihrer Verstellrichtung gegen die Adapterplatte 10 herangefahren und mehrere, beispielsweise ebenfalls vier, an dieser schwenkbar gelagerte Druckdaumen 27 wird je über einen Drukmittelzylinder 28 betätigt, so dass auch die Adapterplatte 10 gegen die bewegliche Formaufspannplatte 20 exakt ausgerichtet und festgelegt ist.

Nunmehr kann nach Lösen der Kupplungsmittel 8 das Formwerkzeug 4 bedarfsweise durch Zusammenfahren oder Auseinanderfahren der beiden Formhälften 5 und 6 beliebig geschlossen und geöffnet werden.

Eine wesentliche, die Rüstzeiten beim Wechsel der Formwerkzeuge 4 wesentlich verringernde Ausgestaltung liegt darin, dass jede der beiden Adapterplatten 9 und 10 mit einem besonderen Armaturenträger 29 und 30 versehen ist, der in einem bestimmten Rastermass angeordnete Kupplungsstücke 31 und 32 für Energiebzw. Medienzuführungssysteme (Wasser und 01) aufweist. Andererseits ist jede der Formaufspannplatten 1 und 2 mit einem Anschlussträger 33 oder 34 versehen, welcher mit im gleichen Rastermass vorgesehenen Gegenkupplungsstücken 35 und 36 ausgestattet ist.

Die Anordnung der Kupplungsstücke 31 an der Adapterplatte 9 und der Gegenkupplungsstücke 35 an der Formaufspannplatte 1 ist dabei so getroffen, dass diese über die Einschubführungen 21 und 22 und/oder Stüt-

EP 0 092 686 B2

zorgane 24 exakt aufeinander ausrichtbar und selbsttätig gegeneinander kuppelbar sind, wenn das Formwerkzeug 4 von oben her mit der Formaufspannplatte 1 in Wirkverbindung gebracht wird.

Andererseits sind die Kupplungsstücke 32 an der Adapterplatte 10 und die Gegenkupplungsstücke 36 an der Formaufspannplatte 2 so ausgerichtet, dass sie exakt und selbsttätig miteinander in Wirkverbindung gelangen, wenn die Formaufspannplatte 2 horizontal gegen das bereits an der Formaufspannplatte 1 ausgerichtete Formwerkzeug 4 herangefahren wird.

Ein weiteres wichtiges Ausgestaltungskriterium liegt darin, dass an den Armaturenträgern 29 und 30 der Adapterplatten 9 und 10 Ventile 37 und 38 oder ähnliche Regel- und/oder Stellorgane des Energie- bzw. Medienzuführsystems angeordnet sind. Bereits bei der Montage des Formwerkzeuges 4 bzw. der Formhälften 5 und 6 auf die Adapterplatten 9 und 10 lassen sich dann die jeweils nötigen Durchströmquerschnitte voreinstellen, womit erreicht wird. dass das Formwerkzeug 4 unmittelbar nach dem Einbau in die Spritzgiessmaschine betriebsbereit ist.

Um einerseits das selbsttätige Wirksam- und Unwirksammachen der Energie- bzw. Medienzuführsysteme zu gewährleisten und andererseits die zugehörigen Armaturenträger und Anschlussträger sowie auch die Ventile oder dergleichen gegen Beschädigung zu schützen, sind an den mit den Stützorganen 24 zusammenwirkenden Enden der Adapterplatten 9 und 10 Ausschnitte 39 und 40 vorgesehen, in deren Bereich die Armaturenträger 29 bzw. 30 und die Anschlussträger 33 bzw. 34 sitzen, während sich seitlich davon und unterhalb derselben die Stützorgane 24 befinden.

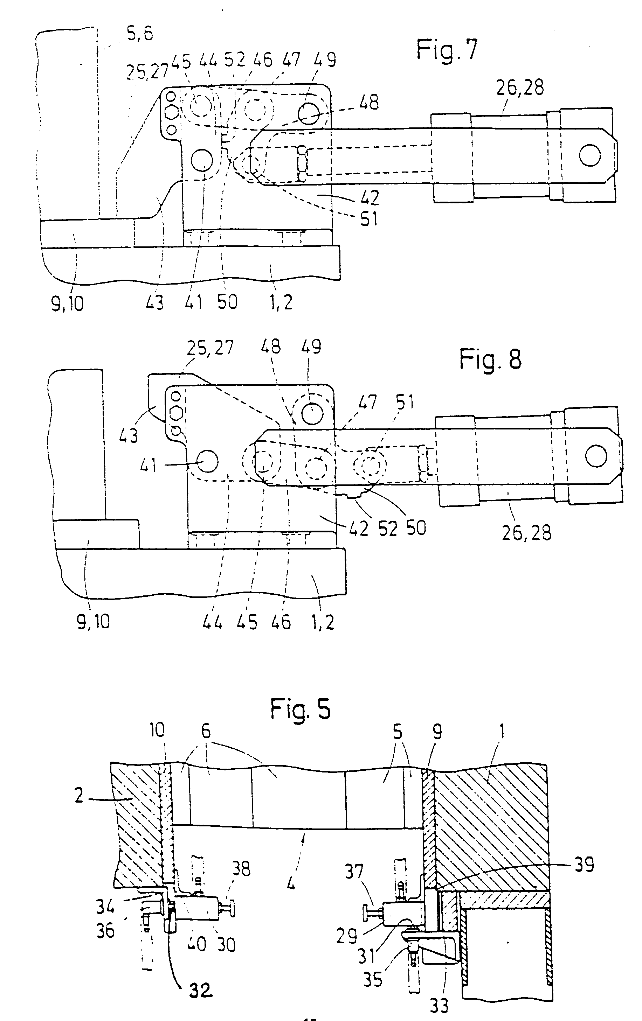

Aus den Fig. 7 und 8 ist noch der Aufbau und die Wirkungsweise der aus den Druckdaumen 25 bzw. 27 und den Druckmittelzylindern 26 bzw. 28 bestehenden Schnellspannvorrichtungen für das Formwerkzeug 4 ersichtlich.

Hiernach ist jeder Druckdaumen 25 bzw. 27 als zweiarmiger Hebel ausgebildet, der um eine Achse 41 in einem Lagerbock 42 verschwenkbar ist, der an der Formaufspannplatte 1 bzw. 2 sitzt. Das freie Ende des einen Hebelarms 43 bildet dabei den eigentlichen Druckdaumen 25 bzw. 27, während am freien Ende des anderen Hebelarms 44 über einen Gelenkbolzen 45 eine Lasche 46 angreift. Diese Lasche 46 ist wiederum über einen Gelenkbolzen 47 an einem Hebel 48 angelenkt, der um einen Gelenkbolzen 49 verschwenkbar im Lagerbock 42 aufgehängt ist.

Der Hebel 48 hat einen vom Bereich des Gelenkbolzens 47 weg abgewinkelten Ausleger 50, an dem wiederum über einen Gelenkbolzen 51 die Kolbenstange des Druckmittelzylinders 26 bzw. 28 angreift.

Durch diese Ausgestaltung der Schnellspannvorrichtungen werden die Druckdaumen 25 bzw. 27 jeweils über ein Gelenkviereck bzw. ein doppeltes Kniehebelsystem betätigt. und zwar dergestalt, dass sich in der unbetätigten Lage des Druckdaumens 25 bzw. 27 gemäss Fig. 8 der aus dem Hebelarm 44 und der Gelenklasche 46 gebildete Kniehebel anähernd in seiner Strecklage befindet, während andererseits der aus der Gelenklasche 46 und dem Hebel 48 bestehende zweite Kniehebel seine Knicklage einnimmt.

Andererseits ist bei wirksamem Druckdaumen 25 bzw. 27 der zweite, von der Gelenklasche 46 und dem Hebel 48 gebildete Kniehebel gemäss Fig. 7 in Strecklage gebracht, während der erste, von der Gelenklasche 46 und dem Hebelarm 44 gebildete Kniehebel seine Knicklage einnimmt.

Als besonders vorteilhaft hat es sich erwiesen, wenn der abgewinkelte Ausleger 50 des Hebels 48 noch einen Anschlag 52 trägt, der bei Strecklage des zweiten Kniehebels zusätzlich gegen den Hebelarm 44 des Druckdaumens 25 bzw. 27 zur Anlage kommt und für diese einen unmittelbar durch den Druckmittelzylinder 26 bzw. 28 beaufschlagte Stützanlage bildet, wie das aus Fig. 7 ersichtlich ist.

Der besondere Vorteil einer solchermassen ausgebildeten Schnellspannvorrichtung liegt darin, dass deren Betriebsstellung jederzeit visuell überwacht werden kann, weil die Druckdaumen 25 bzw. 27 vor der Stirnfläche der Formaufspannplatten 1 und 2 freiliegen. Zugleich wird aber auch gewährleistet, dass die Druckdaumen 25 bzw. 27 selbst dann in ihrer sicheren Spannstellung verbleiben, wenn ein Druckabfall in den Druckmittelzylindern 26 bzw. 28 stattfindet oder aber eine Druckentlastung derselben vorgenommen wird.

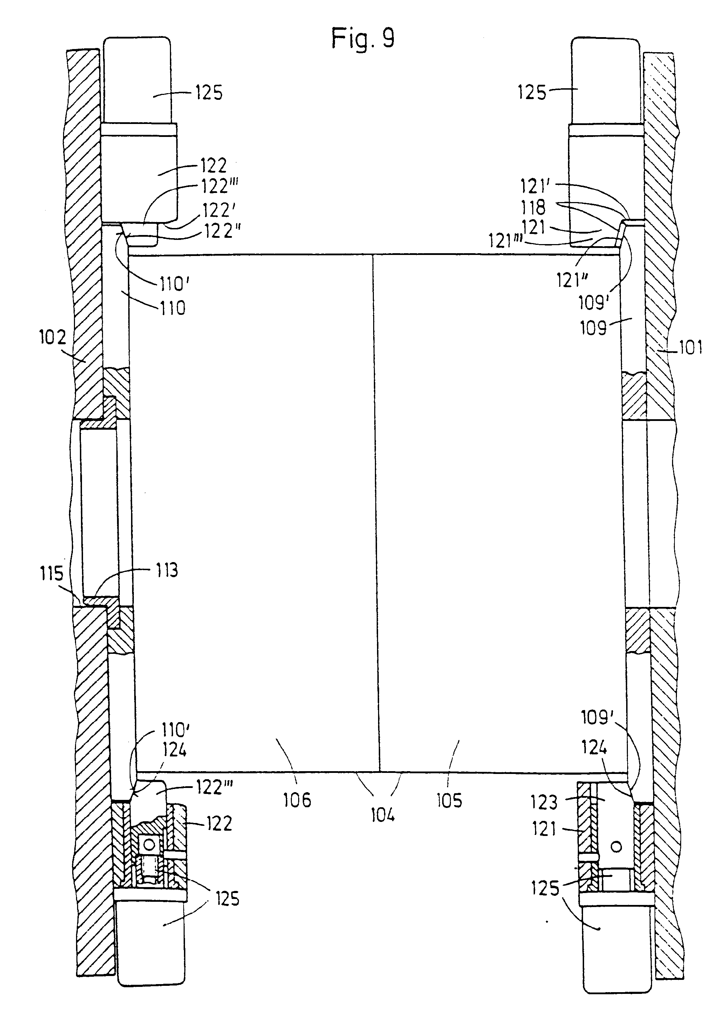

Auch in Fig. 9 der Zeichnung ist von einer Spritzgiessmaschine üblicher Bauart einerseits nur die ortsfeste Formaufspannplatte 101 und andererseits nur die relativ dazu horizontal verschiebbare Formaufspannplatte 102 gezeigt.

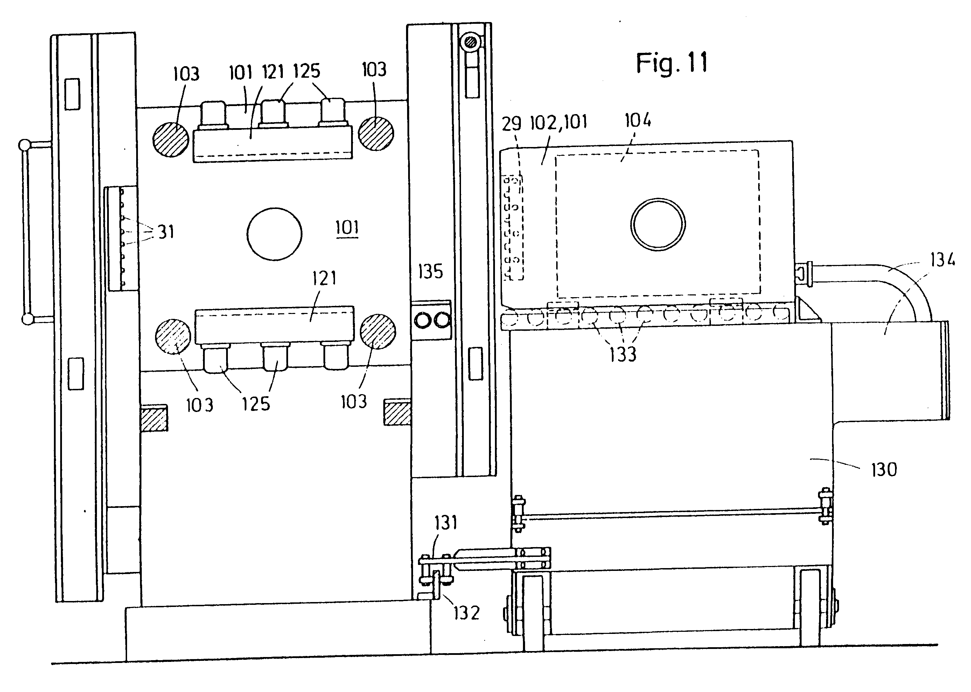

In Fig. 11 ist eine Spritzgiessmaschine üblicher Bauart rein schematisch angedeutet. Dabei ist zu sehen, dass diese mehrere beispielsweise vier, im Querschnitt runde Stangen 103 aufweist, die zur Ausrichtung und relativ verschiebbaren Führung der Formaufspannplatte 102 über der Formaufspanplatte 102 dienen.

Erkennbar ist aus den Fig. 9 und 11 ferner, dass zwischen die beiden Formaufspannplatten 101 und 102 der Spritzgiessmaschine das eigentliche Formwerkzeug 104 eingesetzt wird, welches im wesentlichen aus den beiden Formhälften 105 und 106 zusammengesetzt ist, zwischen denen die eigentliche Formkammer gebildet wird.

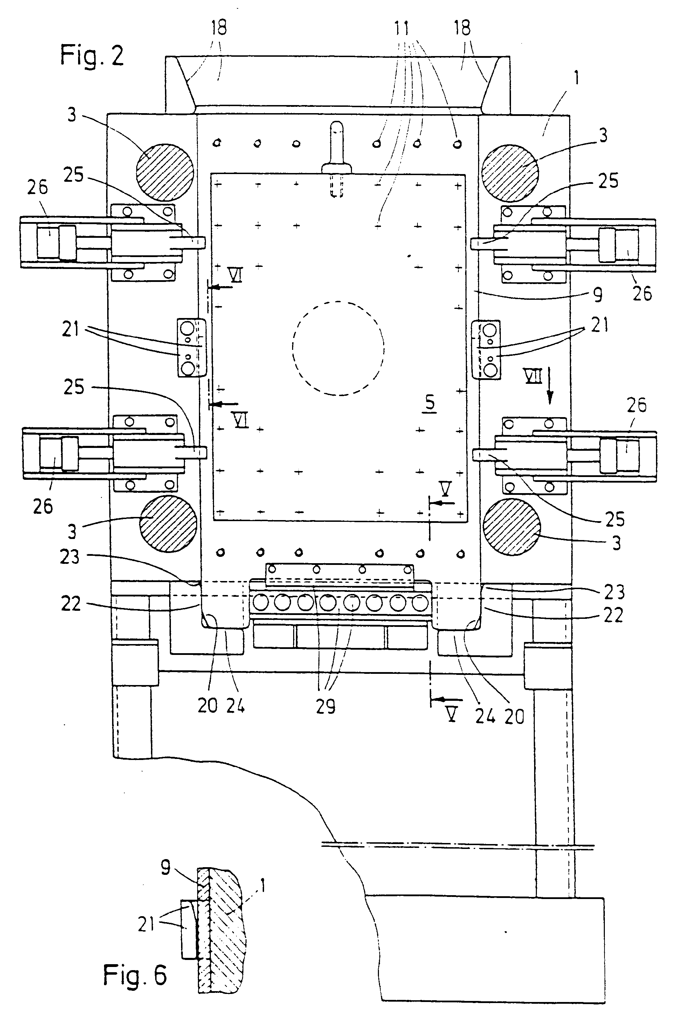

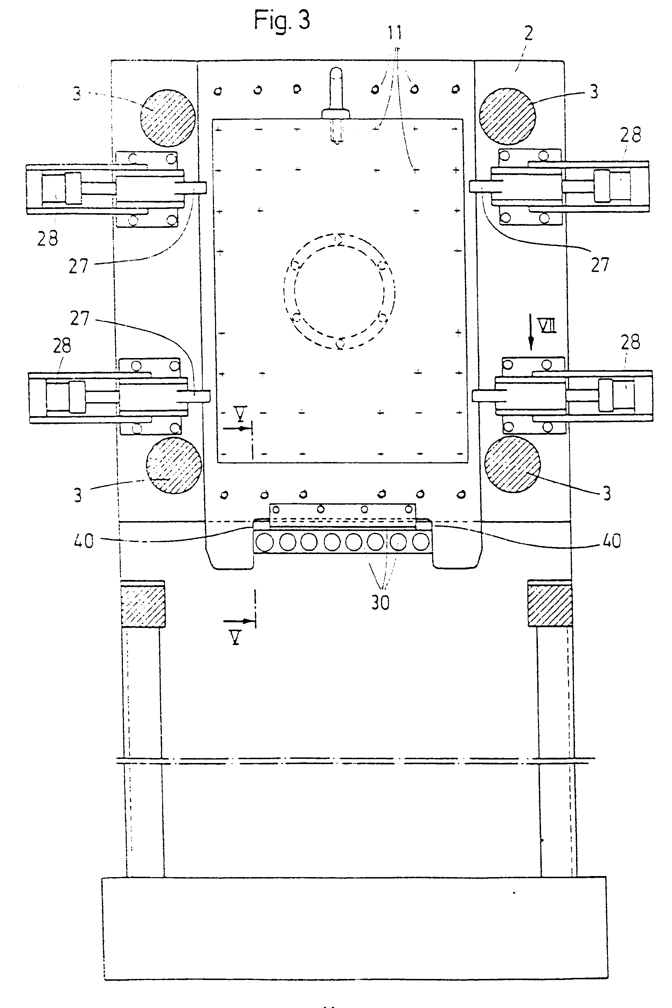

Während beim Ausführungsbeispiel einer Schnellwechsel- und/oder Schnellspannvorrichtung nach den Fig. 1 bis 8 der Wechsel des Formwerkzeuges an der Spritzgiessmaschine in vertikaler Richtung durchgeführt

5

wird, findet er beim Ausführungsbeispiel nach den Fig. 9 bis 11 vorzugsweise in horizontaler Richtung statt, wie das besonders deutlich aus Fig. 11 erkennbar ist.

Auch hier erweist es sich als zweckmässig, die beiden Formhälften 105 Und 106 des Formwerkzeuges 104 für den Werkzeugwechsel aus Sicherheitsgründen in der Schliesslage des Formwerkzeuges 104 durch besondere Kupplungselemente gegeneinander zu verriegeln. Nach dem Einbau des Formwerkzeuges 104 zwischen den beiden Formaufspannplatten 101 und 102 werden diese Kupplungselemente gelöst, so dass die beiden Formhälften 105 und 106 wahlweise zum Öffnen des Formwerkzeuges 104 auseinandergefahren oder zum Schliessen desselben zusammengefahren werden können.

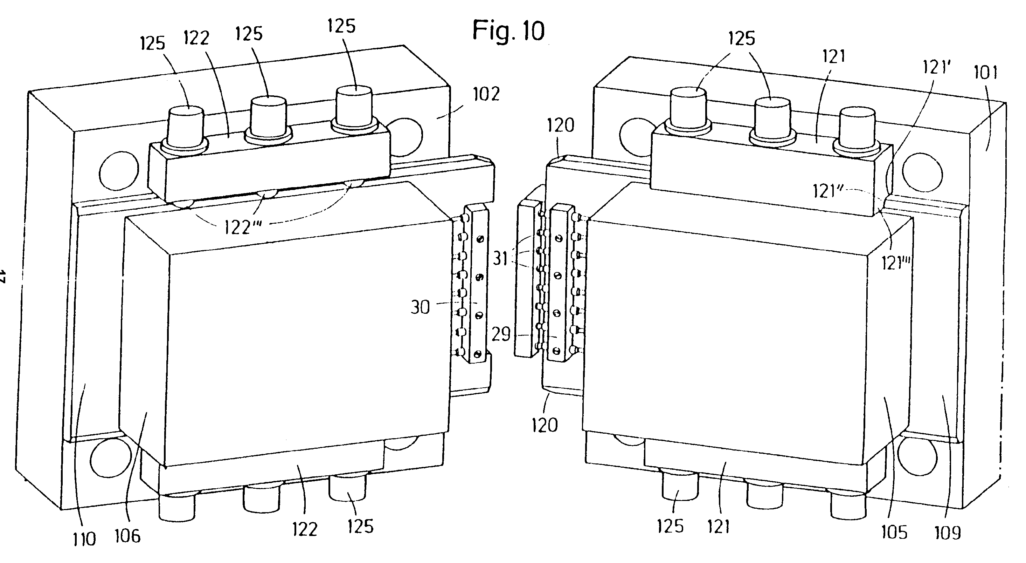

Die Formhälfte 105 des Formwerkzeuges 104 sind gemäss den Fig. 9 und 10 auf einer flachen Adapterplatte 109, während die Formhälfte 106 in ähnlicher Weise auf einer flachen Adapterplatte 110 montiert wird.

Auch in diesem Falle ist es wichtig, dass sämtliche Adapterplatten 109 und 110 übereinstimmende Abmessungen haben, auch wenn die verschiedenen Formwerkzeuge selbst unterschiedlich bemessen sind.

Der Werkzeugwechsel, d.h. der Aus- und Einbau der Formwerkzeuge 104 zwischen den Formaufspannplatten 101 und 102 erfolgt beim Ausführungsbeispiel nach den Fig. 9 bis 11, wie bereits erwähnt, von der Seite her, und zwar in einer quer zur Öffnungs- und Schliessbewegung des Formwerkzeuges 104 verlaufenden Richtung. Er findet unter Zuhilfenahme einer Wechselvorrichtung statt, deren Aufbau und Wirkungsweise im Zusammenhang mit Fig. 11 noch näher erläutert werden.

Für den Werkzeugwechsel werden die Formaufspannplatten 101 und 102 der Spritzgiessmaschine zunächst genügend weit auseinandergefahren. Sodann wird das Formwerkzeug 104 in Horizontalrichtung, und zwar quer zur Öffnungs- und Schliessrichtung der Formaufspannplatten 101 und 102 so eingefahren, dass die Adapterplatte 109 der Formhälfte 105 an der Stirnfläche der Formaufspannplatte 101 entlang in die Einschubführungen 121 gelangt. Diese werden von zwei spiegelbildlich zueinander an der Stirnfläche der Formaufspannplatte 101 sitzenden Leisten gebildet, die einerseits parallel zur Einschubrichtung der Adapterplatte 109 gerichtete Führungsflächen 121′ haben, andererseits aber mit vor die Stirnflächen 109′ der Adapterplatte 109 greifenden Stützflächen 121″ versehen sind, wie das deutlich aus den Fig. 9 und 10 hervorgeht.

Die Stützflächen für die parallel zu ihrer Ebene in die Einschubführrugen 121 der Formaufspannplatte 101 einrückbaren Adapterplatte 109 werden vorzugsweise durch einstückig an die Leisten 121 angeformte Nasen 121‴ gebildet, wobei es sich als zweckmässig erweist, die Stützflächen 121″ und die damit zusammenwirkenden Stirnflächen-Abschnitte 109′ der Adapterplatte 109 gegenüber der Stirnfläche der Formaufspannplatte 101 geneigt verlaufen zu lassen.

Damit das Einfahren der Adapterplatte 109 in die Einschubführungen 121 der Formaufspannplatte 101 erleichtert wird, sind am Einlaufende der Einschubführung 121 jeweils geneigte Leitflächen 118 ausgebildet (Fig. 9), die mit zugehörigen Gegenleitflächen 120 (Fig. 10) am Einschubende der Adapterplatte 109 zusammenwirken können.

Durch die Führungsflächen 121′ und die Stützflächen 121″ der von Leisten gebildeten Einschubführungen 121 wird die Adapterplatte 109 und damit das gesamte Formwerkzeug 104 sowohl parallel als auch quer zur Einschubrichtung exakt gegen die stationäre Formaufspannplatte 101 zentriert und ausgerichtet.

Zur Festlegung der Adapterplatte 109 an der Formaufspannplatte 101 dienen Klemmorgane in Form von quer verschiebbaren Nocken 123, die mit Keilflächen 124 versehen sind, welche mit den geneigten Stirnflächenabschnitten 109′ der Adapterplatte 109 in Wirkverbindung treten, wie das aus Fig. 9 ersichtlich ist. Die Nocken 123 mit den Keilen 124 sind verschiebbar in den die Einschubführungen 121 bildenden Leisten angeordnet und werden, vorzugsweise einzeln, über Druckmittelzylinder 125 betätigt, die an der Aussenseite der Leisten sitzen, wie das deutlich aus den Fig. 9 bis 11 entnehmbar ist.

Nachdem das gesamte Formwerkzeug 104 über die Adapterplatte 109 der Formhälfte 105 exakt an der ortsfesten Formaufspannplatte 101 fixiert ist, wird die verschiebbare Formaufspannplatte 102 gegen die Adapterplatte 110 der Formhälfte 106 herangefahren. Dabei kommt die Adapterplatte 110 über ihre horizontale Längskanten mit horizontalen Führungsflächen 122′ von als Leisten ausgebildeten Einschubführungen 122 in Wirkverbindung, die an der Stirnfläche der Formaufspannplatte 102 montiert sind, wie das aus den Fig. 9 und 10 hervorgeht.

Bevor die Adapterplatte 110 mit ihrer Rückseite auf der Stirnfläche der Formaufspannplatte 102 zur Anlage kommt, kommt weiterhin noch ein Zentrieransatz 113 derselben mit einer Zentrierausnehmung 115 der Formaufspannplatte 102 in Eingriff, wodurch eine exakte Ausrichtung der Formhälfte 106 an der zugehörigen Formaufspannplatte 102 erreicht wird.

Zur endgültigen Festlegung der Adapterplatte 110 und damit der Formhälfte 106 an der Formaufspannplatte 102 dienen verschiebbare Nocken 122‴, die in den die Einschubführungen 122 bildenden Leisten geführt sind und in gleicher Weise Keile 124 bilden, wie die den Einschubführungen 124 zugeordneten Nocken 123. Auch die Nocken 122‴ werden, vorzugsweise einzeln, über Druckmittelzylinder 125 betätigt, die an der Aussenseite der Leisten 122 sitzen. Über ihre Keilflächen 124 wirken sie dabei mit entsprechend geneigt verlaufenden Keilflächen 110′ der Adapterplatte 110 zusammen und bilden auf diese Art und Weise wirksame Klemmorgane zur sicheren Festlegung der Adapterplatte 10 an der Formaufspannplatte 102.

Es ist ohne weiteres erkennbar, dass die Schnellwechsel- und/oder Schnellspannvorrichtung nach den Fig. 9 und 10 bei baulich einfacher Ausgestaltung nur einen geringen Einbauraum benötigt und sich daher auch zur Benutzung in Verbindung mit Formwerkzeugen 104 eignet, die nur eine geringe Bauhöhe aufweisen.

Aus Fig. 11 ist noch erkennbar, dass die an der Spritzgiessmaschine zu wechselnden Formwerkzeuge 104 mit Hilfe eines Wagens 130 in den und/oder aus dem eigentlichen Wechselbereich bewegt werden können. Der Wagen 130 wird dabei mit Hilfe von Führungsorganen 131 längs einer ortsfesten Leitschiene 132 bewegt. Der Wagen 130 trägt dabei eine Rollenbahn 133, auf der das jeweilige Formwerkzeug 104, beispielsweise mittels der unteren Längskanten der Adapterplatten 102, 101 ruht. Mit dem Formwerkzeug 104 lässt sich dabei eine kraftangetriebene Verschiebevorrichtung 134 kuppeln, die sich ebenfalls auf dem Wagen 130 befindet. und welche es ermöglicht, das Formwerkzeug 104 horizontal über die Rollenbahn 133 in die Spritzgiessmaschine hinein und auch aus dieser herauszufahren.

In manchen Fällen kann es sich auch als zweckmässig erweisen. der Spritzgiessmaschine eine ortsfeste Rollenbahn 135 zuzuordnen, die beim Werkzeugwechsel mit der auf dem Wagen 130 montierten Rollenbahn 133 zusammenarbeitet, um ein problemloses und sicheres Ein- und Ausfahren des Formwerkzeuges 104 zu gewährleisten.

**Patentansprüche**

1. Schnellwechsel- und/oder Schnellspannvorrichtung für die Formwerkzeuge (4 bzw. 104) von Spritzgießmaschinen mit einer ortsfesten Formaufspannplatte und mit einer wahlweise zum Schließen des Formwerkzeuges (4 bzw. 104) auf diese zu und zum Öffnen desselben von dieser weg bewegbaren Formaufspannplatte (1, 2 bzw. 101, 102), wobei jede Formhälfte (5, 6 bzw. 105, 106) des Formwerkzeuges (4 bzw. 104) auf einer eigenen rückseitig ebenen Adapterplatte (9, 10 bzw. 109, 110) vormontiert ist, die Adapterplatten (9, 10 bzw. 109, 110) zwischen die geöffneten Aufspannplatten (1, 2 bzw. 101, 102) einschiebbar und über Klemmorgane (25, 26 und 27, 28 bzw. 122‴ und 123) gegen die Formaufspannplatten (1, 2 bzw. 101, 102) festlegbar sind, lediglich die feste Formaufspannplatte (1 bzw. 101) parallel zur Einschubrichtung des Formwerkzeuges (4 bzw. 104) verlaufende, zentrierende und ausrichtende, ortsfeste Einschubführungen (21, 22 bzw. 121) für die zugehörige Adapterplatte (9 bzw. 109) aufweist, denen quer zur Einschubrichtung des Formwerkzeuges (4 bzw. 104) verlaufende Stützorgane (24) zugeordnet sind, beide Formaufspannplatten (1, 2 bzw. 101, 102) je mit einem Kupplungsstücke (31; 32) aufweisenden Anschlußträger (33; 34) und beide Adapterplatten (9, 10 bzw. 109, 110) mit einem dazu passenden, Gegenkupplungsstücke (35; 36) enthaltenden Armaturenträger (29; 30) von Energie-bzw. Medienzuführungssystemen versehen sind, die Kupplungsstücke (31) des Anschlußträgers (33) der ortsfesten Formaufspannplatte (1 bzw. 101) und die Gegenkupplungsstücke (35) des Armaturenträgers (29) der zugeordneten Adapterplatte (9 bzw. 109) parallel zu den Einschubführungen (21, 22 bzw. 121) gerichtet sind, während die Kupplungsstücke (32) des Anschlußträgers (34) an der anderen Formaufspannplatte (2 bzw. 102) und die Gegenkupplungsstücke am Armaturenträger (30) der zugeordneten Adapterplatte (10 bzw. 110) sich in Verstellrichtung dieser Formaufspannplatte (2 bzw. 102) erstrecken und die beiden Adapterplatten (9 und 10 bzw. 109 und 110) und/oder Formhälften (5 und 6 bzw. 105 und 106) bei geschlossenem Formwerkzeug (4 bzw. 104) gegeneinander verriegelbar bzw. miteinander kuppelbar sind, wobei die Adapterplatte (9 bzw. 109) einer Formhälfte (5 bzw. 105) mit den gekuppelten Formhälften parallel zu ihrer Ebene in die Einschubführungen (21, 22) der ortsfesten Formaufspannplatte (1 bzw. 101) einrückbar sowie anschließend die andere Formaufspannplatte (2 bzw. 102) quer zu ihrer Ebene gegen die benachbarte Adapterplatte (10 bzw. 110) anlegbar ist, und dabei einerseits die Kupplungsstücke (31) des Anschlußträgers (33) an der ortsfesten Formaufspannplatte (1 bzw. 101) zu den Gegenkupplungsstücken (35) des Armaturenträgers (29) an der zugehörigen Adapterplatte (9 bzw. 109) über die Einschubführungen (21, 22 bzw. 121) und die Stützorgane (24) und andererseits die Gegenkupplungsstücke (36) und die Kupplungsstücke (32) an der anderen Formaufspannplatte (2 bzw. 102) und der zugehörigen Adapterplatte (10 bzw. 110) exakt gegeneinander ausrichtbar und selbsttätig miteinander in Wirkverbindung bringbar sind.

2. Schnellwechsel- und/oder Schnellspannvorrichtung nach Anspruch 1, **dadurch gekennzeichnet**, daß einerseits die Kupplungsstücke (31 bzw. 32) an jede Formaufspannplatte (1 bzw. 2) und andererseits die Gegenkupplungsstücke (35 bzw. 36) an jede Adapterplatte (9 bzw. 10) mit bestimmtem Rastermaß zueinander angeordnet sind.

3. Schnellwechsel- und/oder Schnellspannvorrichtung nach Anspruch 1 oder 2, **gekennzeichnet durch** eine Zentrierausnehmung (15, 115) in der anderen Formaufspannplatte (2, 102) und einen Zentrieransatz (13, 113) an der zugehörigen Adapterplatte (10, 110).

4. Schnellwechsel- und/oder Schnellspannvorrichtung nach einem der Ansprüche 1 bis 3 dadurch gekennzeichnet, dass am Armaturenträger (29 bzw. 30) Ventile (37 bzw. 38) oder ähnliche Regel- und/oder Stellorgane des Energie- bzw. Medienzuführsystems angeordnet sind.

5. Schnellwechsel- und/oder Schnellspannvorrichtung nach einem der Ansprüche 1 bis 4, dadurch gekennzeichnet, dass an dem mit den Stützorganen (24) zusammenwirkenden Ende der Adapterplatten (9 und 10) Ausschnitte (39 und 40) vorgesehen sind, in deren Bereich die Armaturenträger (29 und 30) und die Anschlussträger (33 und 34) sitzen, während sich seitlich davon und unterhalb derselben die Stützorgane (24) befinden.

6. Schnellwechsel- und/oder Schnellspannvorrichtung nach Anspruch 1, dadurch gekennzeichnet, dass die Klemmorgane (25 und 27) der Schnellspannvorrichtung aus Druckdaumen bestehen, die durch ein üBer einen Druckmittelzylinder (26 und 28) bewegbares, doppeltes Kniehebelsystem (44 bis 49) betätigbar sind.

7. Schnellwechsel- und/oder Schellspannvorrichtung nach Anspruch 6, dadurch gekennzeichnet, dass der Druckdaumen (25 bzw. 27) von einem Arm (43) eines zweiarmigen Hebels (43, 44) gebildet ist und der zweite Arm (44) desselben in der Wirkstellung des Druckdaumens (25 bzw. 27) durch einen Anschlag (52) an dem vom Druckmittelzylinder (26 bzw. 28) bewegten Lenker (48, 59) des zweiten Kniehebels (45 bis 49) bei Strecklage des zweiten Kniehebels (45 bis 49) zusätzlich abstützbar ist.

8. Schnellwechsel- und/oder Schnellspannvorrichtung nach Anspruch 6 oder 7, dadurch gekennzeichnet, dass der Druckdaumen (25 bzw. 27) um 90° verschwenkbar gelagert ist und in seiner unwirksamen Stellung der erste Kniehebel (41; 44 bis 47) wenigstens annähernd seine Strecklage einnimmt.

9. Schnellwechsel- und/oder Schnellspannvorrichtung nach Anspruch 1, dadurch gekennzeichnet, dass das Einlaufende (19) für die Einschubführungen (21 und 22) an der Formaufspannplatte (1) mit schrägen Leitflächen (18) versehen ist.

10. Schnellwechsel- und/oder Schnellspannvorrichtung nach Anspruch 1, dadurch gekennzeichnet, dass die Einschubführungen (121, 122) von an der Stirnfläche der Formaufspannplatte (101, 102) sitzenden Leisten gebildet sind, die einerseits parallel zur jeweiligen Einschubrichtung der Adapterplatten (109, 110) gerichtete Führungsflächen (121', 121") haben und andererseits mit vor die Stirnflächen der Adapterplatten (109, 110) greifenden Stützflächen (121", 122") versehen sind.

11. Schnellwechsel- und/oder Schnellspannvorrichtung nach Anspruch 10, dadurch gekennzeichnet, dass die Stützflächen (121") für die parallel zu ihrer Ebene in die Einschubführungen (121) der zugehörigen Formaufspannplatte (101) einrückbaren Adapterplatte (109) durch einstückig an die Leisten angeformte Nasen (121''') gebildet sind, während die Stützflächen (122") für die quer zu ihrer Ebene in die Einschubführungen (122) der anderen Formaufspannplatte (102) einrückbaren Adapterplatte (110) aus quer verschiebbaren Nokken (122''') bestehen.

12. Schnellwechsel- und/oder Schellspannvorrichtung nach Anspruch 10 oder 11, dadurch gekennzeichnet, dass sämtlichen Einschubführungen (121, 122) querverschiebbare Nocken (123, 122''') zugeordnet sind, die aus Keilen (124) bestehen, und - vorzugsweise einzeln - über Druckmittelzylinder (125) als Klemmorgane gegen die Adapterplatten (109, 110) verspannbar sind.

13. Schnellwechsel- und/oder Schnellspannvorrichtung nach Anspruch 12, dadurch gekennzeichnet, dass die Druckmittelzylinder (125) an der Aussenseite der Leisten (121, 122) sitzen.

## Claims

1. Quick-change device and/or quick-action clamping device for the moulding tools (4 or 104) of injection-moulding machines, with a stationary mould clamping plate and with a mould clamping plate (1, 2 or 101, 102) selectively movable towards this for the closing of the moulding tool (4 or 104) and away from this for the opening of the same, wherein each mould half (5, 6 or 105, 106) of the moulding tool (4 or 104) is pre-assembled on an individual adapter plate (9, 10 or 109, 110) planar at the rear side, the adapter plates (9, 10 or 109, 110) are insertable between the opened clamping plates (1, 2 or 101, 102) and locatable against the mould clamping plates (1, 2 or 101, 102) by way of clamping organs (25, 26 and 27, 28 or 122''' and 123), merely the fixed mould clamping plate (1 or 101) displays centring and orienting, fixedly located insertion guides (21, 22 or 121) for the associated adapter plate (9 or 109), which extend parallelly to the insertion direction of the moulding tool (4 or 104) and are associated with supporting organs (24) extending transversely to the insertion direction of the moulding tool (4 or 104), both mould clamping plates (1, 2 or 101, 102) are respectively provided with a connection carrier (33; 34) displaying coupling members (31; 32) and both adapter plates (9, 10 or 109, 110) are provided with a fittings carrier (29, 30), which contains complementary countercoupling members (35, 36), of energy or media feed systems, the coupling members (31) of the connection carrier (33) of the stationary mould clamping plate (1 or 101) and the countercoupling members (35) of the fittings carrier (29) of the associated adapter plate (9 or 109) are aligned parallelly to the insertion guides (21, 22 or 121), while the cou-

8

pling member (32) of the connection carrier (34) at the other mould clamping plate (2 or 102) and the countercoupling members at the fittings carrier (30) of the associated adapter plate (10 or 110) extend in adjusting direction of this mould clamping plate (2 or 102), and both the adapter plates (9 and 10 or 109 and 110) and/or mould halves (5 and 6 or 105 and 106) are each lockable against the other or each couplable with the other when the moulding tool (4 or 104) is closed, wherein the adapter plate (9 or 109) of one mould half (5 or 105) is movable with the coupled mould halves parallelly to its plane into the insertion guides (21, 22) of the stationary mould clamping plate (1 or 101) as well as the other mould clamping plate (2 or 102) subsequently is layable transversely to its plane against the neighbouring adapter plate (10 or 110), and in that case on the one hand the coupling members (31) of the connection carrier (33) are orientable exactly to and bringable automatically into operative connection with the countercoupling members (35) of the fittings carrier (29) at the associated adapter plate (9 or 109) by way of the insertion guides (21, 22 or 121) and the supporting organs (24) and on the other hand the countercoupling members (36) and the coupling members (32) at the other mould clamping plate (2 or 102) and the associated adapter plate (10 or 11) are orientable exactly relative to one another and bringable automatically into operative connection with one another.

2. Quick-change device and/or quick-action clamping device according to claim 1, characterised thereby, that the coupling members (31 or 32) at each clamping plate (1 or 2) on the one hand and the countercoupling members (35 and 36) at each adapter plate (9 and 10) on the other hand are associated with one another in a certain raster dimension.

3. Quick-change device and/or quick-action clamping device according to claim 1 or 2, characterised by a centring recess (15, 115) in the other mould clamping plate (2, 102) and a centring projection (13, 113) at the associated adapter plate (10, 110).

4. Quick-change device and/or quick-action clamping device according to one of the claims 1 to 3, characterised thereby, that valves (37 or 38) or similar regulating and/or setting organs of the energy or media feed system are arranged at the fittings carrier (29 or 30).

5. Quick-change device and/or quick-action clamping device according to one of the claims 1 to 4, characterised thereby, that notches (39 and 40), in the region of which the fittings carriers (29 and 30) and the connection carriers (33 and 34) sit, whilst the supporting organs (24) are disposed laterally thereof and underneath the same, are provided at those ends of the adapter plates (9 and 10), which co-operate with the supporting organs (24).

6. Quick-change device and/or quick-action clamping device according to claim 1, characterised thereby, that the clamping organs (25 and 27) of the quick-action clamping device consist of pressure cams which are actuable through a double toggle lever system (44 to 49) movable by way of a pressure medium cylinder (26 and 28).

7. Quick-change device and/or quick-action clamping device according to claim 6, characterised thereby, that the pressure cam (25 or 27) is formed by one arm (43) of a two-armed lever (43, 44) and the second arm (44) of the same is additionally supportable, in the case of the straight position of the second toggle lever (45 to 49), in the effective position of the pressure cam (25 or 27) by an abutment (52) at that guide rod (48, 59) of the second toggle lever (45 to 49), which is moved by the pressure medium cylinder (26 or 28).

8. Quick-change device and/or quick-action clamping device according to claim 6 or 7, characterised thereby, that the pressure cam (25 or 27) is borne to be pivotable through 90° and, in its ineffective setting, the first toggle lever (41; 44 to 47) at least approximately assumes its straight position.

9. Quick-change device and/or quick-action clamping device according to claim 1, characterised thereby, that the inlet end (19) for the insertion guides (21 and 22) at the mould clamping plate (1) is provided with oblique guide surfaces (18).

10. Quick-change device and/or quick-action clamping device according to claim 1, characterised thereby, that the insertion guides (121, 122) are formed by strips which sit at the end face of the mould clamping plate (101, 102), on the one hand have guide surfaces (121′, 121″) oriented parallelly to the respective insertion direction of the adapter plates (109, 110) and on the other hand are provided with support surfaces (121″, 122″) engaging in front of the end faces of the adapter plates (109, 110).

11. Quick-change device and/or quick-action clamping device according to claim 10, characterised thereby, that the support surfaces (121″) for the adapter plate (109), which is movable parallelly to its plane into the insertion guides (121) of the associated mould clamping plate (101), are formed by lugs (121‴) integrally shaped on at the strips, whilst the support surfaces (122″) for the adapter plate (110), which is movable transversely to its plane into the insertion guides (122) of the other mould clamping plate (102), consist of transversely displaceable dogs (122″).

12. Quick-change device and/or quick-action clamping device according to claim 10 or 11, characterised thereby, that all insertion guides (121, 122) are associated with transversely displaceable dogs (123, 122″), which consist of wedges (124) and are tightenable, preferably individually, as clamping organs against the adapter plates (109, 110) by way of pressure medium cylinders (125).

13. Quick-change device and/or quick-action clamping device according to claim 12, characterised thereby, that the pressure medium cylinders (125) sit at the outside of the strips (121, 122).


**Revendications**

1. Dispositif de remplacement et/ou de serrage rapides des outils de moulage (4 ou 104) de machines de moulage sous pression qui comporte une plaque de serrage du moule qui est fixée et une plaque de serrage du moule (1, 2 ou 101, 102) qui est mobile et peut, au choix, se rapprocher de la précédente pour la fermeture de l'outil de moulage (4 ou 104) ou s'écarter pour son ouverture, chaque moitié de moule (5, 6 ou 105, 106) de l'outil de moulage (4 ou 104) étant préalablement montée sur une plaque d'adaptation (9, 10 ou 109, 110) qui lui est propre et est plane du côté arrière, les plaques d'adaptation (9, 10 ou 109, 110) pouvant êtreengagées entre les plaques de serrage ouvertes (1, 2 ou 101, 102) et pouvant être fixées par l'intermédiaire d'organes de serrage (25, 26 et 27, 28 ou 122 et 123) contre les plaques de serrage (1, 2 ou 101, 102) du moule, la plaque de serrage du moule (1 ou 101) qui est fixée comportant seule des dispositifs de guidage d'introduction (21, 22 ou 121) de la plaque d'adaptation correspondante (9 ou 109) qui sont fixes, parallèles à la direction d'introduction de l'outil de moulage (4 ou 104) et assurent le centrage et le montage et auxquels sont associés des organes d'appui (24) orientés transversalement par rapport à la direction d'introduction de l'outil de moulage (4 ou 104), les deux plaques de serrage du moule (1, 2 ou 101, 102) étant munies chacune d'un support de raccordement (33, 34) comportant des pièces d'accouplement (31, 32) et les deux plaques d'adaptation (9, 10 ou 109, 110) étant munies d'un support d'armature (29, 30) de système d'apport d'énergie ou d'amenée de milieux comportant des contre-pièces d'accouplement (35, 36) correspondantes, les pièces d'accouplement (31) du support de raccordement (33) de la plaque de serrage du moule (1 ou 101) qui est fixe et les contre-pièces d'accouplement (35) du support d'armature (29) de la plaque d'adaptation correspondante (9 ou 109) étant orientées parallèlement aux dispositifs de guidage d'introduction (21, 22 ou 121) tandis que les pièces d'accouplement (32) du support de raccordement (34) de l'autre plaque de serrage du moule (2 ou 102) et les contre-pièces d'accouplement du support d'armature (30) de la plaque d'adaptation correspondante (10 ou 110) s'étendent dans la direction de déplacement de cette plaque de serrage du moule (2 ou 102), les deux plaques d'adaptation (9 et 10 ou 109 et 110) et/ou les deux moitiés de moule (5 et 6 ou 105 et 106) pouvant, lorsque l'outil de moulage (4 ou 104) est fermé, être verrouillées l'une sur l'autre ou accouplées l'une à l'autre, la plaque d'adaptation (9 ou 109) d'une moitié de moule (5 ou 105), avec les moitiés de moule accouplées, pouvant être engagée parallèlement à son plan dans les dispositifs de guidage d'introduction (21, 22) de la plaque de serrage du moule (1 ou 101) qui est fixé et l'autre plaque de serrage du moule (2 ou 102) pouvant être ensuite appliquée transversalement par rapport à son plan contre la plaque d'adaptation voisine (10 ou 110) et d'une part les pièces d'accouplement (31) du support (33) de raccordement de plaque de serrage du moule (1 ou 101) qui est fixe pouvant être montées avec précision les unes par rapport aux autres avec les contre-pièces d'accouplement (35) du support d'armature (29) de la plaque d'adaptation (9 ou 109) au moyen des dispositifs de guidage d'introduction (21, 22 ou 121) et des organes d'appui (24) et, d'autre part, les contre-pièces d'accouplement (36) et les pièces d'accouplement (32) de l'autre plaque de serrage du moule (2 ou 102) et de la plaque d'adaptation correspondante (10 ou 110) pouvant être montées avec précision les unes par rapport aux autres et accouplées automatiquement les unes aux autres.

2. Dispositif de remplacement et/ou de serrage rapides selon l'une des revendications 1 ou 2, caractérisé en ce que la plaque de serrage (2) du moule est également munie de supports de raccordement (34) comportant des pièces d'accouplement (32) et que la plaque d'adaptation (10) est munie d'un support d'armature (30) de systèmes d'apport d'énergie et d'amenée de milieux comportant des contre-pièces d'accouplement (34) et en ce que les pièces d'accouplement (31 ou 32), d'une part, sont associées, suivant un module déterminé à chaque plaque de serrage (1 ou 2) et que les contre-pièces d'accouplement, d'autre part, sont associées aux plaques d'adaptation (9 et 10).

3. Dispositif de remplacement et/ou de serrage rapides selon l'une des revendications 1 à 3, caractérisé en ce que les contre-pièces d'accouplement (36) et les pièces d'accouplement (32) de la plaque de serrage (2) du moule et de la plaque d'adaptation 10 correspondante s'étendent dans la direction de déplacement de la plaque de serrage (2) du moule qui, au moyen d'un pièce de centrage (13) et d'un évidement de centrage (15) ménagés sur la plaque de serrage (2) du moule et sur la plaque d'adaptation (10), peuvent être mises en place exactement l'une en face de l'autre et coopèrent automatiquement l'une avec l'autre.

4. Dispositif de remplacement et/ou de serrage rapides selon l'une des revendications 1 à 3, caractérisé en ce que les supports d'armature (29 ou 30) comportent des soupapes (37 ou 38) ou des organes de réglage et/ou de déplacement analogues du système d'apport d'énergie ou d'amenée de milieux.

5. Dispositif de remplacement et/ou de serrage rapides selon l'une des revendications 1 à 4, caractérisé en ce que l'extrémité des plaques d'adaptation (9 et 10) qui coopère avec les organes d'appui (24 comporte des échancrures (39 et 40) dans la zone desquelles sont placés les supports d'armature (29 et 30) et les supports de raccordement (33 et 34) tandis que les organes d'appui (24) se trouvent sur le côté et en-dessous d'eux.

6. Dispositif de remplacement et/ou de serrage rapides selon la revendication 1 caractérisé en ce que les organes de serrage (25 et 27) du dispositif de serrage rapide sont constitués par des cames d'impression qui peuvent être manoeuvrées au moyen d'un système de leviers coudés (44 à 49) qui se déplacent sous l'action d'un vérin à milieu de pression (26 et 28).

7. Dispositif de remplacement et/ou de serrage rapides selon la revendication 6, caractérisé en ce que la came d'impression (25 ou 27) est constituée par un bras (43) d'un levier (43, 44) et que son deuxième bras (44) peut, de plus, prendre appui, dans la position d'action de la came d'impression (25 ou 27), contre une butée (52) ménagée sur la tige (48, 59) du deuxième levier coudé (45 à 49) déplacée par le vérin (26 ou 28) à milieu de pression dans la position d'extension du deuxième levier coudé (45 à 49).

8. Dispositif de remplacement et/ou de serrage rapides selon l'une des revendications 6 ou 7, caractérisé en ce que la came d'impression (25 ou 27) est monté de manière à pouvoir pivoter de 90° et que, dans la position dans laquelle elle est hors d'action, le premier levier coudé (41, 44 à 47) se place au moins approximativement dans sa position d'extension.

9. Dispositif de remplacement et/ou de serrage rapides selon la revendication 1, caractérisé en ce que l'extrémité d'introduction (19) du dispositif de guidage d'introduction (21 et 22) de la plaque de serrage (1) du moule comporte des surfaces de guidage obliques (18).

10. Dispositif de remplacement et/ou de serrage rapides selon la revendication 1, caractérisé en ce que les dispositifs de guidage d'introduction (121, 122) sont constitués par des bords qui sont réalisés sur la surface frontale de la plaque de serrage (101, 102) du moule et qui comporte d'une part des plaques de guidage (109, 110) orientées parallèlement à la direction d'introduction des plaques d'adaptation (109, 110) et, d'autre part, des surfaces d'appui (121″, 122″) qui interviennent en avant des surfaces frontales des plaques d'adaptation (109, 110).

11. Dispositif de remplacement et/ou de serrage rapides selon la revendication 10, caractérisé en ce que les surfaces d'appui (112) pour la plaque d'adaptation qui peut s'engager parallèlement à leur plan dans les dispositifs de guidage d'introduction (121) de la plaque de serrage correspondante (101) du moule sont constituées par des becs (121‴) réalisés d'un seul tenant sur les bords tandis que les surfaces d'appui (122′) pour la plaque d'adaptation (110) qui peut s'engager transversalement à leur plan dans les dispositifs de guidage d'introduction (122) de l'autre plaque de serrage (102) du moule sont constituées par des cames (122‴) qui peuvent se déplacer transversalement.

12. Dispositif de remplacement et/ou de serrage rapides selon l'une des revendication 10 à 11, caractérisé en ce qu'à tous les dispositifs de guidage d'introduction (121, 122) correspondant des cames (123, (122‴) qui peuvent se déplacer transversalement et sont constituées par des coins (124) et qui, comme organes de serrage, peuvent être serrés, de préférence individuellement, au moyen de vérins (125) à milieu de pression, contre les plaques d'adaptation (109, 110).

13. Dispositif de remplacement et/ou de serrage rapides selon la revendications 12, caractérisé en ce que les vérins (125) à milieu de pression se trouvent sur le côté extérieur des bords (121, 122).

11

Fig. 1

Fig. 4

12

Fig. 2

Fig. 6

## Fig. 3

Fig. 7

Fig. 8

Fig. 5

# Fig. 9

Fig. 10

EP 0 092 686 B2

Fig. 11